# FASCICULE DE BREVET EUROPEEN

(11) **EP 0 948 064 B1**
(45) Date de publication et mention de la délivrance du brevet: **09.07.2003**
(21) Numéro de dépôt: 98105759.9
(22) Date de dépôt: 30.03.1998
(51) Int. Cl.: H01M 2/02, H01M 10/04

(54) **Accumulateur ou pile prismatique avec container rigide et compressif**
Prismatische aufladbare oder primäre Zelle mit steifem und zusammendrückendem Halter
Prismatic rechargeable or primary cell with rigid and compressive container

(43) Date de publication de la demande: 06.10.1999
(73) Titulaire: Renata AG, 4452 Itingen (CH)
(72) Inventeur: Wyser, Paul Julian, 9050 Appenzell (CH)
(74) Mandataire: Thérond, Gérard Raymond

(56) Documents cités:
- EP-A- 0 655 793
- US-A- 5 556 722
- PATENT ABSTRACTS OF JAPAN vol. 095, no. 003, 28 avril 1995 -& JP 06 342649 A (SANYO ELECTRIC CO LTD), 13 décembre 1994,
- PATENT ABSTRACTS OF JAPAN vol. 013, no. 053 (E-713), 7 février 1989 & JP 63 245851 A (TOSHIBA BATTERY CO LTD), 12 octobre 1988,
- PATENT ABSTRACTS OF JAPAN vol. 098, no. 001, 30 janvier 1998 & JP 09 237613 A (ASAHI SEIKI KOGYO KK), 9 septembre 1997,

## Description

La présente invention concerne un accumulateur ou une pile prismatique, désigné par la suite par le terme générique de "batterie", que cette source d'énergie soit rechargeable ou non. L'invention concerne plus particulièrement une telle batterie dans laquelle la source d'énergie est formée d'un enroulement de matériaux actifs de type "jelly roll".

Dans les appareils portables, tels que les téléphones mobiles, les batteries de forme prismatique sont généralement préférées à celles de forme bâton notamment pour réduire la taille de l'appareil dans son ensemble. Ces appareils portables, qui doivent par définition être légers, incorporent généralement des circuits et des composants électroniques fragiles et souvent exigeants du point de vue de la consommation d'énergie. Il est donc souhaitable que les batteries prismatiques utilisées dans de tels appareils possèdent une grande densité d'énergie tout en étant légères et d'un coût de fabrication le moins élevé possible, qu'elles aient une longévité suffisante notamment dans le cas d'accumulateurs et qu'elles présentent à l'emploi toutes les garanties nécessaires du point de vue sécurité, tant vis-à-vis de l'utilisateur que vis-à-vis des circuits électroniques contigus.

La présente invention a pour but de procurer une batterie prismatique qui, pour une densité de courant déterminé, soit plus légère, qui ait un coût de fabrication moins élevé que les batteries prismatiques de l'art antérieur et dont la conception permette aussi d'accroître la sécurité d'emploi.

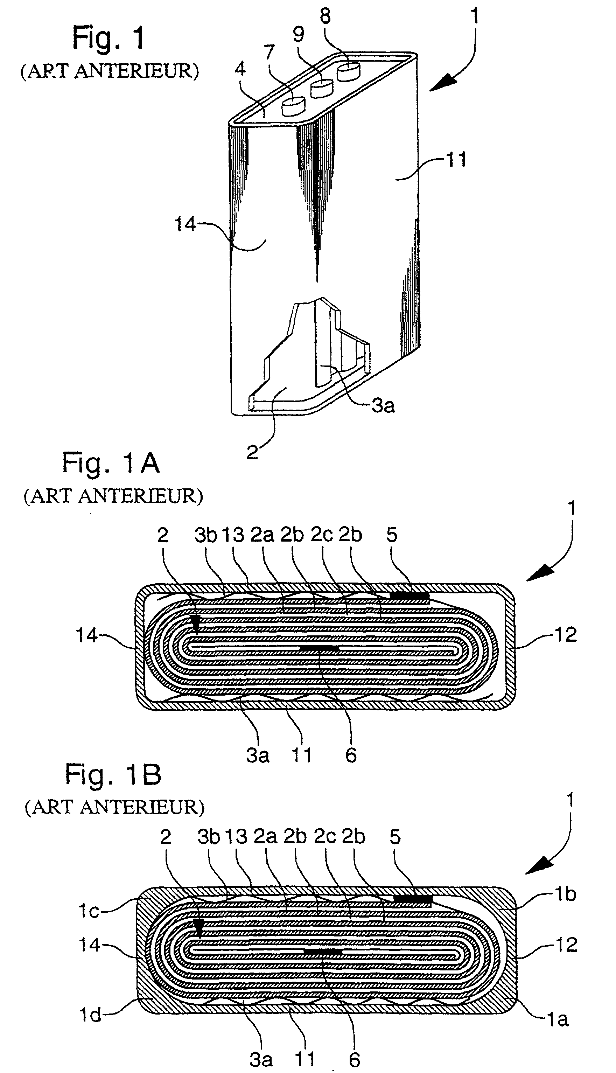

Les batteries prismatiques de l'art antérieur, schématiquement représentées à la figure 1 sont constituées par un container métallique 1 de forme parallélépipédique, à l'intérieur duquel est placé un enroulement 2 spiral non circulaire, dit de type "jelly roll" (visible sur les figures 1A, 1B) qui est imprégné d'un électrolyte après mise en place dudit enroulement. Cet enroulement est obtenu à partir d'au moins une bande composite comprenant une couche d'un matériau actif formant l'anode 2a, un séparateur poreux 2b, une couche d'un matériau actif formant la cathode 2c et un deuxième séparateur poreux 2b. L'anode et la cathode comportent chacune des moyens de connexion 5, 6, généralement disposés près de la paroi interne du container 1 et au centre de l'enroulement 2. Cet enroulement "jelly roll" est généralement maintenu comprimé au moyen de deux lames élastiques ondulées 3a, 3b, disposées entre les grandes parois 11, 13 du container 1 et ledit enroulement 2. Ces lames élastiques permettent aussi d'absorber les petites variations de volume de l'enroulement 2 lors des cycles de charge/décharge. L'unité ainsi formée est scellée hermétiquement par un couvercle 4 supportant des contacts 7, 8 reliés électriquement aux électrodes 2a, 2c par les moyens de connexion 5, 6 lesdites liaison électriques étant effectuées par soudage. Ce type de batterie prismatique, notamment dans le cas d'un accumulateur comporte en outre généralement un évent de sécurité schématiquement représenté en 9. Cet évent de sécurité 9 est en effet nécessaire compte tenu des réactions chimiques qui se produisent et qui peuvent provoquer une élévation de la pression et/ou de la température. En raison des tensions mécaniques qui s'exercent sur l'enveloppe de la batterie, on a d'abord choisi de former le container dans une feuille d'acier d'égale épaisseur de l'ordre de 0,5 mm (figure A). Pour rendre cette batterie plus légère et moins chère, on a ensuite proposé de remplacer l'acier par l'aluminium ou un alliage d'aluminium. Pour avoir la même résistance à la déformation il est alors nécessaire d'augmenter l'épaisseur de la paroi du container, ce qui présente l'inconvénient, soit d'augmenter la taille de la batterie pour une densité d'énergie donnée, soit de réduire la quantité de matériau actif et donc la densité d'énergie si on veut maintenir la taille de la batterie dans des dimensions normalisées.

Pour éviter cet inconvénient le document US 5,556,722 propose de renforcer les angles la à 1d du container, c'est-à-dire d'avoir localement une surépaisseur, comme représenté à la figure 1B. Bien que le procédé de fabrication d'un tel container ne soit pas décrit, il est évident qu'une telle configuration augmente le coût du produit final étant donné qu'on ne peut plus utiliser comme matériau de départ une feuille métallique d'égale épaisseur.

Le but de la présente invention est de pallier les inconvénients susmentionnés en procurant une batterie prismatique à enroulement de type "jelly roll", ayant un poids et un coût de fabrication réduit, tout en disposant d'une densité d'énergie au moins égale aux batteries prismatiques connues ayant les mêmes dimensions extérieures.

A cet effet l'invention a pour objet une batterie prismatique comprenant un container métallique d'épaisseur sensiblement identique en tout point, à l'intérieur duquel est disposé un enroulement spiral non circulaire formé par une bande composite comprenant une anode, des séparateurs et une cathode imprégnés d'un électrolyte, ledit container étant obturé à sa partie supérieure par un capot scellé supportant deux contacts reliés électriquement à l'anode et à la cathode par l'intermédiaire de moyens de connexion, caractérisée en ce que ledit container est formé par une base rectangulaire et, perpendiculairement à celle-ci, par deux petites parois solidaires de ladite base, deux grandes parois solidaires d'une part des petites parois par l'intermédiaire d'étroites bandes de largeur l₁, d'autre part de la base par l'intermédiaire d'étroites bandes de largeur l₂, lesdites bandes étant inclinées contre les faces externes des grandes parois et ayant entre elles des lignes de jonction à partir des quatre angles de la base.

Les bandes joignant les grandes parois aux petites parois forment par rapport au plan des grandes parois un angle α₁ et les bandes joignant les grandes parois à la base un angle α₂. De façon à ce que les lignes de jonctions des bandes entre elles au niveau des angles soient parfaites, il est nécessaire que les variables α₁, α₂, l₁ et l₂ soient liées par la relation l₁ sin α₁ = l₂ sin α₂.

Il est ainsi possible, en faisant une utilisation rationnelle de l'espace libre laissé dans les angles par l'enroulement spiral, et sans pour autant prévoir un profil particulier pour la partie tubulaire du container, de donner aux grandes parois une rigidité suffisante pour résister aux pressions internes de la batterie prismatique. En effet, on crée ainsi une nervure périphérique qui raccourcit la distance de flexion au niveau des arrêtes. Si on utilise l'aluminium ou un alliage d'aluminium pour la fabrication du container, l'épaisseur des parois pourra être sensiblement la même que celle des containers en acier, c'est-à-dire de l'ordre de 0,5 mm pour les batteries de type courant, et on obtiendra donc un avantage au niveau du poids et du coût.

Si on utilise encore l'acier, ou l'un de ses alliages, il sera alors possible de réduire l'épaisseur des parois du container par exemple de 0,5 mm à 0,35 mm en conservant les mêmes caractéristiques mécaniques, tout en ayant encore un avantage au niveau du poids et du coût.

Selon un autre aspect de l'invention la réduction de coût résulte aussi du fait qu'il n'est plus nécessaire d'interposer un espaceur élastique entre les grandes parois et l'enroulement spiral pour obtenir une bonne cohésion de l'enroulement spiral, cohésion nécessaire pour obtenir le rendement optimum des matériaux actif, et donc la meilleure densité d'énergie possible.

Ce résultat est obtenu grâce à un procédé de fabrication du container consistant à déformer par matriçage une feuille métallique de façon à obtenir un container convexe ayant à sa base des bandes de jonction correspondant aux valeurs α₁, α₂, l₁ et l₂, puis à introduire l'enroulement spiral et en dernier lieu à estamper les grandes parois pour leur conférer une forme concave.

On observera que le procédé selon l'invention offre l'avantage de présenter, avant l'estampage des grandes parois, une cavité ayant un volume supérieur au volume final, ce qui permet de mettre en place l'enroulement "jelly roll" déjà imprégné d'électrolyte, malgré le gonflement que cela a provoqué.

D'autres caractéristiques et avantages de la présente invention apparaîtront dans la description suivante en référence aux dessins annexés dans lesquels.
- les figures 1, 1A et 1B représentent des batteries prismatiques de l'art antérieur;
- la figure 2 représente en perspective partiellement arrachée une batterie prismatique selon l'invention;
- la figure 3 est une vue en coupe selon la ligne III-III de la figure 2;
- la figure 4 est une vue de dessus du container de la figure 2, avant estampage des grandes parois;
- la figure 5 est une vue de côté d'une petite paroi du container de la figure 2 avant estampage des grandes parois; et
- la figure 6 représente en coupe la déformation possible du container représenté à la figure 3.

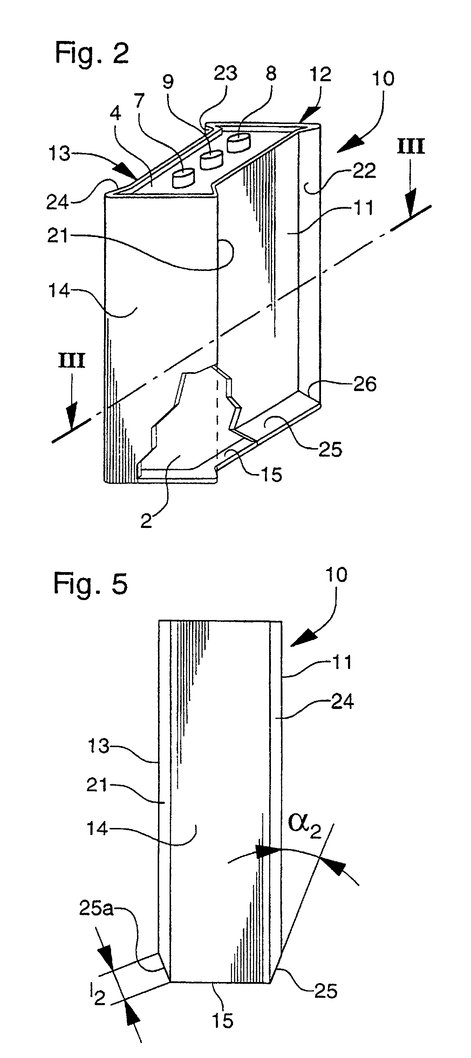

Les figures 1, 1A et 1B ayant déjà été décrites en préambule comme représentatives de l'état de la technique, on considère maintenant les figures 2 à 6 qui représentent une batterie prismatique selon l'invention, ces figures permettant aussi de comprendre les étapes principales du procédé de fabrication.

La batterie prismatique représentée à la figure 2 comprend un container 1 métallique formé d'un élément tubulaire fermé à sa partie inférieure par un fond de forme générale rectangulaire 15. L'élément tubulaire comprend deux grandes parois planes 11, 13, deux petites parois planes 12, 14 et d'étroites bandes rectangulaires verticales 21, 22, 23, 24, et horizontales 25 et 25a (non visible sur la figure 2) assurant les jonctions des parois entre elles et des parois avec le fond. Tous les éléments ci-dessus constituant le container ont tous sensiblement la même épaisseur. Il n'existe en particulier pas de surépaisseur crée dans les angles verticaux du container. Les bandes 21 à 24 de largeur l₁ permettent de joindre les petites parois 12, 14 aux grande parois 11, 13 et sont inclinées vers l'intérieur du container 1 d'un angle α₁. Les bandes 25 et 25a de largeur l₂ permettent de joindre le fond 15 aux grandes parois 11, 13 et sont également inclinées vers l'intérieur du container d'un angle α₂. De part et d'autre des grandes faces de la batterie deux bandes verticales 21 et 22, respectivement 23 et 24, sont reliées à une bande horizontale 25, respectivement 25a, selon des lignes de jonction 26, lesdites lignes de jonctions étant parfaites si les paramètres α₁, α₂, l₁ et l₂ définissant les orientations des bandes et leurs largeurs répondent à la relation l₁ sin α₁ = 12 sin α₂. Le container contient un enroulement 2 de matériau actif de type jelly-roll imprégné d'un électrolyte en étant fermé à sa partie supérieur par un capot 4 pourvu de contacts 7, 8 et d'un évent de sécurité 9. Les contacts sont reliées électriquement aux électrodes de l'enroulement 2 par des moyens de connexion 5, 6. Le capot 4 a la même forme que la section interne du container, c'est-à-dire une forme générale rectangulaire ayant des becs triangulaires dans les angles, et il est soudé audit container. La batterie prismatique ainsi obtenue se caractérise donc par l'aspect concave de ses grandes faces extérieures. Si on le souhaite la batterie prismatique ainsi obtenue peut être recouverte d'une gaine plastique thermorétractable ayant le profil approprié et pouvant servir à des inscriptions, telles que les caractéristiques de la batterie ou le nom du fabricant.

Le container qui vient d'être décrit est obtenu de façon simple et économique comme expliqué ci-après en référence aux dessins 4 à 6. Pour obtenir le container représenté à la figure 2, on part d'une feuille métallique ayant les dimensions appropriées. Cette feuille est par exemple constituée par un alliage d'aluminium au magnésium et silicium, type Alpax® ou Duralumin®, et elle a une épaisseur suffisante pour obtenir un produit final ayant une épaisseur uniforme de l'ordre de 0,45 mm. On soumet ladite feuille à une opération de matriçage selon l'axe de l'ouverture pour obtenir un container convexe 10, représentée aux figures 4 et 5, ladite opération étant éventuellement suivie par un traitement thermique pour conférer au container les propriétés mécaniques souhaitées. Cette opération permet de conformer les angles de jonction entre les grandes parois 11, 13 et les petites parois 12, 14 de façon à avoir d'étroites bandes 21 à 24, de largeur l₁ et formant un angle aigu α₁ avec le plan des grandes parois 11, 13 (figure 4). De la même façon cette opération permet de conformer les angles de jonction des grandes parois 11, 13 avec le fond 15 de façon à avoir d'étroites bandes 25, 25a de largeur l₂ et formant un angle aigu α₂ avec le plan des grandes parois 11, 13 (figure 5). Comme indiqué précédemment, de façon à avoir une ligne de jonction 26 parfaite entre les bandes 25, 25a et les bandes 21 à 24 (visible sur la figure 2), les valeurs l₁, l₂, α₁ et α₂ doivent être liées par la relation l₁ sin α₁ = l₂ sin α₂. En pratique on choisira pour les angles α₁ et α₂ des valeurs voisines, et donc pour les largeurs de bande l₁, l₂ également des valeurs voisines.

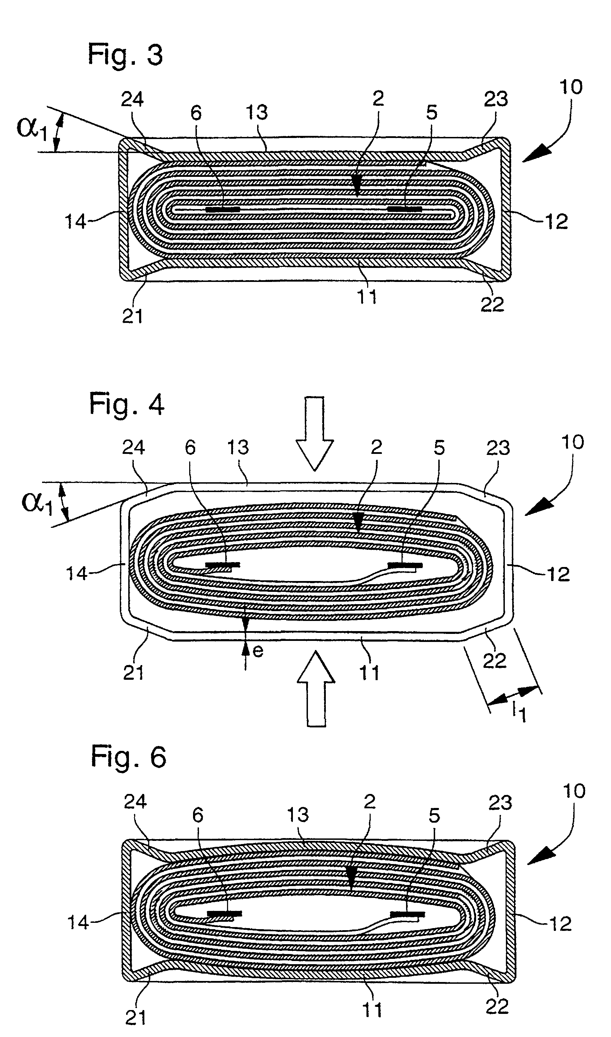

A titre d'exemple, pour une batterie prismatique ayant sensiblement pour dimensions extérieures 48 x 34 x 10 mm et une épaisseur de 0,45 mm, on peut donner aux bandes 21 à 24 la largeur l₁ = 2,7 mm avec un angle α₁ = 15° et aux bandes 25, 25a la largeur l₂ = 3,6 mm avec un angle α₂ =11,2°. Les parties angulaires formées en creux par les bandes à l'intérieur du container peuvent être utiles pour la construction de la batterie comme cela sera expliqué par ailleurs. Une fois le container convexe 10 obtenu, on introduit dans sa cavité un enroulement 2 de type "jelly roll", sans interposer de lames de compression dans l'espace libre laissé entre les faces internes des grandes parois 11, 13 et ledit enroulement 2, comme on le voit sur la figure 4. Comme indiqué précédemment cet enroulement peut avantageusement être introduit en étant déjà imprégné d'électrolyte. On procède ensuite à l'estampage des deux grandes parois 11, 13 au moyen d'une matrice en forme d'un tronc de pyramide dont la tête a une surface rectangulaire égale à celle d'une grande paroi et dont les angles correspondent aux valeurs α₁ et α₂. On obtient alors la configuration représentée à la figure 3, dans laquelle l'enroulement 2 est maintenant comprimé par les grandes parois, avec une pression qui est fonction de la valeur donnée à l'angle α₁. On termine la fabrication de la batterie selon les techniques connues, en ajustant si nécessaire la quantité d'électrolyte, en effectuant des cyclages dans le cas d'un accumulateur, puis en réalisant avec les moyens de connexion 5, 6 la jonction électrique entre l'anode et la cathode et les deux contacts 7, 8 puis en scellant hermétiquement le capot 4.

En référence à la figure 6, on observera également que les grandes parois 11, 13 permettent, comme le faisaient les lames élastiques des batteries de l'art antérieur, d'absorber les variations de volume de l'enroulement spiral lors des cycles de charge/décharge.

En choisissant un métal autre que l'aluminium, ayant des caractéristiques mécaniques plus élevées, tel qu'un acier inoxydable, le cuivre ou le laiton, il est possible de réduire l'épaisseur du container, par exemple à 0,35 mm en ayant par là-même encore un avantage au niveau du poids et du coût.

Les modes de réalisation décrits ci-dessus, tant au niveau du choix des matériaux qu'au niveau des dimensions du container de la batterie, sont susceptibles d'être adaptés par l'homme de l'art à la destination spécifique d'une batterie, sans sortir du cadre de la présente invention.

## Revendications

1. Batterie prismatique comprenant un container (1) métallique d'épaisseur sensiblement identique en tout point, à l'intérieur duquel est disposé un enroulement spiral non circulaire (2), formé par une bande composite comprenant une anode (2a), des séparateurs (2b, 2d) et une cathode (2c), imprégnés d'un électrolyte, ledit container (1) étant obturé à sa partie supérieure par un capot (4) scellé supportant deux contacts (7,8) reliés électriquement à l'anode (2a) et à la cathode (2c) par l'intermédiaire de moyens de connexion (5, 6), **caractérisée en ce que** ledit container (1) est formé par une base rectangulaire (15) et, perpendiculairement à celle-ci, par deux petites parois (12, 14) solidaires de ladite base (15), deux grandes parois (11, 13) solidaires d'une part des petites parois (12, 14) par l'intermédiaire d'étroites bandes (21 à 24) de largeur l₁, d'autre part de la base (15) par l'intermédiaire d'étroites bandes (25, 25a) de largeur l₂, lesdites bandes (21 à 24, 25 à 25a) étant inclinées contre les faces externes des grandes parois (11, 13) et ayant entre elles des lignes de jonction (26) à partir des quatre angles de la base (15).

2. Batterie prismatique selon la revendication 1 dans laquelle les bandes (21 à 24) joignant les grandes parois (11, 13) et les petites parois (12, 14) forment avec le plan des grandes parois un angle α₁ et les bandes (25, 25a) joignant les grandes parois (11, 13) à la base (15) un angle α₂, **caractérisée en ce que** les valeurs α₁, α₂, l₁ et l₂ sont liées par la relation l₁ sin α₁ = l₂ sin α₂ pour rendre parfaites les lignes de jonction (26).

3. Batterie prismatique selon la revendication 1, **caractérisée en ce que** le métal formant le container (1) est choisi parmi l'aluminium et un alliage d'aluminium.

4. Batterie prismatique selon la revendication 1, **caractérisée en ce que** le métal formant le container (1) est choisi parmi l'acier inoxydable, le cuivre et le laiton.

5. Batterie prismatique selon la revendication 1, **caractérisée en ce que** les grandes parois (11, 13) sont en contact avec l'enroulement (2) pour en assurer la compression.

6. Batterie prismatique selon la revendication 1, **caractérisée en ce que** les parties en dépression formées par les grandes parois (11, 13) et les bandes (21 à 24, 25 à 25a) sont garnies avec un matériau plastique.

7. Procédé de fabrication d'une batterie prismatique selon les revendications 1 et 2, **caractérisé en ce que** le container (1) est obtenu à partir d'une feuille métallique en effectuant successivement :
- un matriçage selon l'axe de l'ouverture pour obtenir un container convexe (10), dont les dimensions et les orientations des bandes de jonction (21 à 24, 25, 25a) correspondent aux valeurs α₁, α₂, l₁ et l₂.
- un estampage des grandes parois (11, 13) en ayant préalablement placé à l'intérieur du container convexe (10) un enroulement spiral non circulaire (2).

## Patentansprüche

1. Prismatische Batterie mit einem metallischen Behälter einer an allen Stellen im wesentlichen gleichen Dicke, in dessen Innerem eine spiralförmige, nicht kreisförmige Wicklung (2) angeordnet ist, die aus einem zusammengesetzten Band gebildet ist, welches eine Anode (2a), Isolierungen (2b, 2d) und eine Kathode (2c) aufweist und mit einem Elektrolyt getränkt ist, wobei der Behälter (1) an seinem oberen Abschnitt mit einer versiegelten Kappe (4) dicht verschlossen ist, die zwei Kontakte (7, 8) trägt, die über Verbindungsmittel (5, 6) elektrisch mit der Anode (2a) und der Kathode (2c) verbunden sind, **dadurch gekennzeichnet, daß** der Behälter (1) durch eine rechteckige Basis (15) und durch zwei kleine Wandungen (12, 14) senkrecht zu dieser gebildet ist, die mit der Basis (15) fest verbunden sind, wobei zwei große Wandungen (11, 13) einerseits über schmale Streifen (21 bis 24) der Breite I₂ mit den kleinen Wandungen (12, 14) und andererseits über schmale Streifen (25, 25a) der Breite I₂ mit der Basis (15) fest verbunden sind, wobei die Streifen (21 bis 24, 25 bis 25a) gegenüber den Außenflächen der großen Wandungen (11, 13) geneigt sind und zwischen sich von den vier Ecken der Basis (15) ausgehende Verbindungslinien (26) aufweisen.

2. Prismatische Batterie nach Anspruch 1, bei der die Streifen (21 bis 24) mit den großen Wandungen (11, 13) verbunden sind und die kleinen Wandungen (12, 14) mit der Ebene der großen Wandungen einen Winkel α₁ bilden und die Streifen (25, 25a) mit den großen Wandungen (11, 13) an der Basis (15) mit einem Winkel α₂ verbunden sind, **dadurch gekennzeichnet, daß** die Werte α₁, α₂, I₁ und I₂ durch die Beziehung I₁ sin α₁ = I₂ sin α₂ miteinander verbunden sind, um die Verbindungslinien (26) zu vervollständigen.

3. Prismatische Batterie nach Anspruch 1, **dadurch gekennzeichnet, daß** das den Behälter (1) bildende Metall aus Aluminium und einer Aluminiumlegierung gewählt ist.

4. Prismatische Batterie nach Anspruch 1, **dadurch gekennzeichnet, daß** das den Behälter bildende Material aus rostfreiem Stahl, Kupfer und Messing gewählt ist.

5. Prismatische Batterie nach Anspruch 1, **dadurch gekennzeichnet, daß** die großen Wandungen (11, 13) mit der Wicklung (2) in Berührung sind, um den Druck sicherzustellen.

6. Prismatische Batterie nach Anspruch 1, **dadurch gekennzeichnet, daß** die durch die großen Wandungen (11, 13) und die Streifen (21 bis 24, 25 bis 25a) gebildeten vertieften Abschnitte mit einem Kunststoffmaterial versehen sind.

7. Verfahren zum Herstellen einer prismatischen Battiere nach den Ansprüchen 1 und 2, **dadurch gekennzeichnet, daß** der Behälter ausgehend von einer Metallplatte erhalten wird durch aufeinanderfolgendes:
- Formen um eine Öffnungsachse, um einen konvexen Behälter (10) zu erhalten, bei dem die Abmessungen und Ausrichtungen der Verbindungsstreifen (21 bis 24, 25, 25a) den Werten α₁, α₂, I₁ und I₂ entsprechen,
- Pressen der großen Wandungen (11, 13), wobei zuvor im Inneren des konvexen Behälters (10) eine spiralförmige, nicht kreisförmige Wicklung (12) angeordnet wird.

## Claims

1. Prismatic battery including a metal container (1) of substantially identical thickness at any point, within which is arranged a non circular spiral winding (2) formed by a composite strip including an anode (2a), separators (2b, 2d) and a cathode (2c), impregnated by an electrolyte, said container (1) being sealed at its upper portion by a sealed cover (4) carrying two contact terminals (7, 8) electrically connected to the anode (2a) and the cathode (2c) via connection means (5, 6), **characterised in that** said container (1) is formed by a rectangular base (15) and, perpendicular to the latter, by two small walls (12, 14) attached to said base (15), two large walls (11, 13) attached on the one hand to the small walls (12, 14) via narrow strips (21 to 24) of width I₁, on the other hand to the base (15) via narrow strips (25, 25a) of width I₂, said strips (21 to 24, 25 to 25a) being inclined towards the external faces of the large walls (11, 13) and having between them junction lines (26) from the four angles of the base (15).

2. Prismatic battery according to claim 1, wherein the strips (21 to 24) joining the large walls (11, 13) and the small walls (12, 14) form with the plane of the large walls an angle α₁ and the strips (25, 25a) joining the large walls (11, 13) to the base (15) form an angle α₂, **characterised in that** the values α₁, α₂, I₁ and I₂ satisfy the relationship I₁ sin α₁ = I₂ sin α₂ to make the junction lines (26) perfect.

3. Prismatic battery according to claim 1, **characterised in that** the metal forming the container (1) is selected from among aluminium and an aluminium alloy.

4. Prismatic battery according to claim 1, **characterised in that** the metal forming the container (1) is selected from among stainless steel, copper and brass.

5. Prismatic battery according to claim 1, **characterised in that** the large walls (11, 13) are in contact with the winding (2) to assure the compression thereof.

6. Prismatic battery according to claim 1, **characterised in that** the depressed portions formed by the large walls (11, 13) and the strips (21 to 24, 25 to 25a) are sheathed in a plastic material.

7. Method for manufacturing a prismatic battery according to claims 1 and 2, **characterised in that** the container (1) is obtained from a metal sheet, by performing successively :
- die-stamping along the opening axis to obtain a convex container (10), in which the dimensions and orientation of the junction strips (21 to 14, 25, 25a) correspond to the values α₁, α₂, I₁ and I₂;
- stamping the large walls (11, 13) having previously placed within the convex container (10) a non circular spiral winding (2).
